# EUROPÄISCHE PATENTANMELDUNG

(11) **EP 4 810 429 A1**
(43) Veröffentlichungstag der Anmeldung: **23.09.2026**
(21) Anmeldenummer: 26154271.6
(22) Anmeldetag: 27.01.2026
(51) Int. Cl.: B66C 23/40, B60K 6/48, B60K 6/52

(54) **MOBILKRAN-ANTRIEBSSTRANG MIT ELEKTRISCHEM ANTRIEB**

(30) Priorität: 21.03.2025 DE 102025110974
(71) Anmelder: Manitowoc Crane Group France SAS, 69574 Dardilly Cedex (FR)
(72) Erfinder: KRUG, Andreas, 26125 Oldenburg (DE); STÜHRWOLDT, Dieter, 26384 Wilhelmshaven (DE)
(74) Vertreter: SSM Sandmair

(57) **Zusammenfassung**

Die vorliegende Erfindung betrifft einen Mobilkran-Antriebsstrang zur Leistungsversorgung des Fahrantriebs, mit
- einem Verbrennungsmotor (2) zur Bereitstellung von Antriebsleistung;
- zumindest zwei angetriebenen Fahrwerksachsen (3, 4); und
- einem zwischen dem Verbrennungsmotor (2) und den Fahrwerksachsen (3, 4) angeordneten Verteilergetriebe (5), welches die vom Verbrennungsmotor (2) bereitgestellte Leistung auf die Fahrwerksachsen (3, 4) verzweigt und hierfür einen mit dem Verbrennungsmotor (2) gekoppelten Antrieb (6) und zwei jeweils mit zumindest einer Fahrwerksachse (3, 4) gekoppelte Abtriebe (7, 8) aufweist;
wobei das Verteilergetriebe (5) über einen weiteren Antrieb (9) mit einem Motor-Generator (10) gekoppelt ist, welcher dazu ausgestaltet ist, den Antriebsstrang wahlweise mit Leistung zu versorgen oder Leistung vom Antriebsstrang aufzunehmen. Die Erfindung betrifft ferner ein Verfahren zur Steuerung eines solchen Mobilkran-Antriebsstrangs und einen Mobilkran (1) mit einem solchen Antriebsstrang und insbesondere mit einer Steuerungseinrichtung (12), die dazu ausgestaltet ist, ein solches Verfahren auszuführen.

## Beschreibung

Die vorliegende Erfindung betrifft einen Mobilkran-Antriebsstrang zur Leistungsversorgung des Mobilkran-Fahrantriebs. Der Antriebsstrang umfasst hierbei einen Verbrennungsmotor, zumindest zwei angetriebene Fahrwerksachsen und ein Verteilergetriebe zur Verzweigung der vom Verbrennungsmotor bereitgestellten Leistung auf die Fahrwerksachsen. Die Erfindung betrifft ferner ein Verfahren zur Steuerung eines solchen Antriebsstrangs und einen Mobilkran mit einem solchen Antriebsstrang.

Für den Straßentransport zwischen den Einsatzorten weisen Mobilkrane einen Fahrantrieb auf. Gewöhnlicherweise stellt ein Dieselmotor die für den Antrieb der Fahrwerksachsen notwendige Leistung bereit. Bei sogenannten "All-Terrain"-Mobilkranen verfügen neben ein oder mehreren im hinteren Fahrwerksbereich angeordneten Achsen auch ein oder mehrere im vorderen Fahrwerksbereich angeordnete Achsen über einen Antrieb, um eine gewisse Geländegängigkeit zu erreichen. Hierbei wird die vom Verbrennungsmotor über eine Antriebswelle übertragene Leistung mittels eines Verteilergetriebes auf einen vorderen und einen hinteren Antriebsstrang verzweigt, die sich zu den jeweiligen Fahrwerksachsen erstrecken.

Getrieben vom Wunsch, einen emissionsfreien Kranbetrieb zu ermöglichen, richten sich jüngste Bestrebungen auf dem Gebiet der Mobilkrane auf den Einsatz hybrider Antriebskonzepte, welche neben dem Verbrennungsmotor einen Elektromotor als zusätzlichen Energiewandler zur Bereitstellung oder Abnahme von mechanischer Leistung aufweisen. Auch im Bereich des Fahrantriebs lassen hybride Antriebskonzepte eine Verbesserung des Emissionsverhaltens erwarten. Aus der WO 2023/104562 ist eine Bau- und/oder Materialumschlagsmaschine mit einem Verbrennungsmotor bekannt, mittels welchem über einen mechanischen Antriebsstrang ein oder mehrere Verbraucher angetrieben werden. Zusätzlich zum Verbrennungsmotor ist ein Elektroantrieb zum Antreiben des mechanischen Antriebsstrangs vorgesehen.

Es ist die Aufgabe der vorliegenden Erfindung, einen Mobilkran-Antriebsstrang zur Leistungsversorgung des Fahrantriebs bereitzustellen, welcher auf unkomplizierte Weise einen elektrischen Antrieb in einen konventionell aufgebauten Mobilkran-Antriebsstrang integriert und so ein effizientes hybrides Antriebskonzept für einen Mobilkran ermöglicht.

Diese Aufgabe wird durch den Gegenstand des Patentanspruchs 1 wie auch der nebengeordneten Patentansprüche 6 und 10 gelöst. Die Unteransprüche bilden den erfindungsgemäßen Gegenstand vorteilhaft weiter.

Der erfindungsgemäße Mobilkran-Antriebsstrang zur Leistungsversorgung des Fahrantriebs umfasst hierbei einen Verbrennungsmotor zur Bereitstellung von Antriebsleistung, zumindest zwei angetriebene Fahrwerksachsen und ein zwischen dem Verbrennungsmotor und den Fahrwerksachsen angeordnetes Verteilergetriebe, welches die vom Verbrennungsmotor bereitgestellte Leistung auf die Fahrwerksachsen verzweigt. Hierfür weist das Verteilergetriebe einen mit dem Verbrennungsmotor gekoppelten Antrieb und zwei jeweils mit zumindest einer Fahrwerksachse gekoppelte Abtriebe auf. Erfindungsgemäß weist das Verteilergetriebe zumindest einen weiteren Antrieb auf, über den es, insbesondere jeweils mit zumindest einem Motor-Generator gekoppelt ist, welcher den Antriebsstrang wahlweise mit Leistung versorgen oder Leistung vom Antriebsstrang aufnehmen kann. Der Einfachheit halber wird dieser zusätzliche Antrieb im Folgenden oftmals als "Antrieb" bezeichnet, obwohl er im GeneratorBetrieb des Motor-Generators auch als (Neben-)Abtrieb bezeichnet werden könnte.

Mit anderen Worten wird der erfindungsgemäße Antriebsstrang durch Anbinden eines Motor-Generators an das bereits vorhandene Verteilergetriebe für den Fahrantrieb verwirklicht, so dass dieser über eine Antriebs- bzw. Abtriebswelle des Verteilergetriebes Wellenleistung über das Verteilergetriebe abgeben bzw. über dieses aufnehmen kann. Zum Anbinden des Motor-Generators kann insbesondere bei Nachrüstlösungen bestehender Mobilkrane auf einen bislang für mechanische oder hydraulische Antriebe genutzten Nebenabtrieb des Verteilergetriebes zurückgegriffen werden. In diesem Zusammenhang wird deutlich, dass aufwendige Neuentwicklungen oder umfangreiche Nachrüstungen durch das erfindungsgemäße Antriebskonzept vermieden werden, da zum Anbinden eines Motor-Generators in einen konventionellen Antriebsstrang eines Mobilkran-Fahrantriebs der Motor-Generator im einfachsten Fall lediglich ersatzweise an einen bislang anderweitig genutzten Nebenabtrieb des Verteilergetriebes gekoppelt werden muss. Im aufwendigsten Fall wird dies durch einen einfachen Austausch des vorhandenen Verteilergetriebes durch ein Verteilergetriebe mit einem zusätzlichen Nebenabtrieb ermöglicht.

Gemäß einer Ausführungsform ist das Verteilergetriebe dauerhaft mit dem Motor-Generator gekoppelt. Um die vom Motor-Generator an das Getriebe abgegebene bzw. über das Getriebe aufgenommene Wellenleistung bedarfsgerecht zu variieren, weist der Motor-Generator eine Leistungselektronik auf. Ist beispielsweise ein über den Motor-Generator gespeister Energiespeicher bzw. Akkumulator bereits vollgeladen, kann die Leistungselektronik die Ladeleistung auf null reduzieren.

Bei einer alternativen Ausführungsform der vorliegenden Erfindung ist das Verteilergetriebe trennbar mit dem Motor-Generator gekoppelt. Eine für diesen Zweck vorgesehene Kupplung kann beispielsweise zwischen dem zusätzlichen Antrieb des Verteilergetriebes und der Rotor- bzw. Läuferwelle des Motor-Generators angeordnet sein. Eine mechanische Trennung des Motor-Generators vom Verteilergetriebe kann beispielsweise durch eine reibschlüssige Kupplung erreicht werden. Im Rahmen der vorliegenden Erfindung ist hierfür allerdings eine formschlüssige Kupplung, insbesondere eine Klauenkupplung zur vollständigen Trennung des Kraftschlusses zwischen dem Verteilergetriebe und dem Motor-Generator zu bevorzugen. Da in einem solchen Fall ein Aus- oder Einkuppeln nur bei Stillstand oder Gleichlauf der zu koppelnden Wellen möglich wäre, ist es in diesem Zusammenhang ferner vorstellbar, dass der Motor-Generator so angesteuert bzw. geregelt wird, dass beim Ein- und Auskuppeln ein Gleichlauf der zu koppelnden Wellen erreicht wird bzw. die formschlüssige Kupplung durch entsprechende Ansteuerung des Motor-Generators momentenfrei geschalten wird.

Gemäß einer weiteren Ausführungsform sind der mit dem Verbrennungsmotor gekoppelte Antrieb und der mit dem Motor-Generator gekoppelte Antrieb des Verteilergetriebes zueinander koaxial angeordnet. Auf diese Weise kann beispielsweise ein Durchtrieb zwischen dem mit dem Verbrennungsmotor gekoppelten Antrieb und dem mit dem Motor-Generator gekoppelten Antrieb realisiert werden. Die Läuferwelle des Motor-Generators und die verbrennungsmotorseitige Antriebswelle weisen dann folglich die gleiche Drehzahl auf.

Der erfindungsgemäße Antriebsstrang kann ferner eine Steuerungseinrichtung umfassen, um die vom Motor-Generator an den Antriebsstrang abgegebene und/oder die vom Motor-Generator aus dem Antriebsstrang entnommene Leistung automatisch zu steuern bzw. zu regeln, insbesondere gemäß einem der nachfolgend beschriebenen Verfahren.

Ein weiterer Aspekt der vorliegenden Erfindung betrifft ein Verfahren zur Steuerung eines Mobilkran-Antriebsstrangs gemäß einer der voranstehend beschriebenen Ausführungsformen. Hierbei wird der Motor-Generator während des Fahrbetriebs des Mobilkrans wahlweise so angesteuert, dass
- der Motor-Generator zeitgleich mit dem Verbrennungsmotor den Fahrantrieb mit Leistung versorgt, insbesondere bei hoher Last, im Speziellen bei Volllast des Verbrennungsmotors;
- der Motor-Generator dem Fahrantrieb Leistung zum Laden eines zur Leistungsversorgung des Mobilkrans ausgestalteten Akkumulators entnimmt, insbesondere in Abhängigkeit der bis zum nächsten Kranbetrieb zur Verfügung stehenden Zeit;
- ausschließlich der Motor-Generator den Fahrantrieb mit Leistung versorgt, insbesondere wenn durch das Verteilergetriebe eine Untersetzung des Fahrantriebs erfolgt; und/oder
- eine Abschaltung der Leistungsabgabe und/oder der Leistungsaufnahme des Motor-Generators erfolgt, sobald ein Anti-Blockier-System oder Bremsregelsystem an den Fahrwerksachsen eingreift.

Insbesondere kann der Motor-Generator so angesteuert werden, dass der Akkumulator so schnell wie möglich bis zu einem vordefinierten Ladezustand geladen wird. In einem solchen Fall kann der Motor-Generator beispielsweise zusätzlich so angesteuert werden, dass er keine Leistung an den Fahrantrieb abgibt. Ferner kann der Motor-Generator so angesteuert werden, dass er unter Berücksichtigung der bis zum nächsten Kranbetrieb zur Verfügung stehenden Zeit so viel Leistung vom Antriebsstrang aufnimmt, dass der Akkumulator bis zum nächsten Kranbetrieb einen vordefinierten Ladezustand erreicht, insbesondere vollgeladen wird.

Ferner kann der Motor-Generator so angesteuert werden, dass er den Fahrantrieb insbesondere beim Beschleunigen oder bei hoher Last wie etwa bei Bergauffahrten mit Leistung versorgt. Sollte der Ladezustand des Akkumulators unter einem vordefinierten Wert liegen, beispielsweise unter 40%, kann der Motor-Generator trotzdem so angesteuert werden, dass er bevorzugt den Akkumulator lädt und somit auch bei höherer Last des Verbrennungsmotors keine Leistung an den Fahrantrieb abgibt.

Zudem ist es vorstellbar, dass der Motor-Generator während des Schubbetriebs oder des Abbremsens des Mobilkrans den Akkumulator lädt und die somit aufgenommene Leistung zur Verzögerung des Mobilkrans beiträgt Ferner ist es möglich, dass der Motor-Generator beim Erreichen eines vordefinierten Ladezustands des Akkumulators keine Leistung aus dem Antriebsstrang mehr aufnimmt, beispielsweise durch Trennen der Kupplung zwischen dem Verteilergetriebe und dem Motor-Generator oder durch eine entsprechende Ansteuerung durch die Leistungselektronik des Motor-Generators.

Der Motor-Generator kann ferner so angesteuert werden, dass er beim Beschleunigen oder bei einer im Wesentlichen konstante Fahrgeschwindigkeit eine geringere als die maximal mögliche Leistung aufnimmt, um die Fahrleistung und/oder den Kraftstoffverbrauch nicht zu beeinflussen.

Gemäß einer weiteren Ausführungsform wird
- bei Leistungsversorgung des Fahrantriebs durch den Motor-Generator die Leistungsabgabe des Motor-Generators; und/oder
- bei Leistungsaufnahme durch den Motor-Generator aus dem Fahrantrieb die Leistungsaufnahme des Motor-Generators;
in Abhängigkeit zumindest einer der folgenden Größen angesteuert:
- Fahrgeschwindigkeit des Mobilkrans;
- Bremspedalstellung;
- Gaspedalstellung bzw. Last des Verbrennungsmotors;
- Drehzahl des Verbrennungsmotors;
- derzeitige Übersetzung des dem Verteilergetriebe vorgeschalteten Getriebes, insbesondere Schalt- oder Automatikgetriebes;
- Schaltzustand bzw. Untersetzung des insbesondere mehrstufigen Verteilergetriebes;
- jeweilige Temperaturen des Motor-Generators, des Akkumulators und/oder diesen zugeordneter Komponenten;
- Ladezustand des Akkumulators;
- vordefinierter, insbesondere durch den Fahrer oder Bediener gewählter Betriebszustand und/oder Leistungsprofil des Krans und/oder des Akkumulators.

Eine weitere Ausführungsform der vorliegenden Erfindung sieht alternativ oder additiv zu einer mittels einer Leistungselektronik variierten Leistungsaufnahme bzw. Leistungsabgabe vor, dass die Kopplung zwischen dem Verteilergetriebe und dem Motor-Generator getrennt wird, insbesondere durch Öffnen einer formschlüssigen Kupplung, sobald der Akkumulator einen vordefinierten Ladezustand erreicht hat und der Mobilkran zumindest vorübergehend zum Stillstand gekommen ist.

Ferner kann der Motor-Generator auch zur Leistungsversorgung des Mobilkrans während des Kranbetriebs dienen, währenddessen das Verteilergetriebe bzw. dessen Abtriebe die Fahrwerksachsen nicht antreibt, insbesondere sich das Verteilergetriebe bzw. dessen Abtriebe für die Fahrwerksachsen im Leerlauf befinden, und das dem Verteilergetriebe vorgeschaltete Getriebe ein vordefiniertes Übersetzungsverhältnis bereitstellt, wobei der Motor-Generator elektrische Antriebe von Kranfunktionen und/oder elektrisch betriebene Krankomponenten mit Leistung versorgt, insbesondere
- mittelbar über einen zwischen den Motor-Generator und die Antriebe der Kranfunktionen geschalteten Akkumulator und/oder
- unmittelbar während eines bei defektem und/oder entladenem Akkumulator und/oder bei zu hoher oder zu niedriger Temperatur des Akkumulators herrschenden Notbetriebs der Antriebe der Kranfunktionen.

Ein weiterer Aspekt der Erfindung betrifft einen Mobilkran mit einem wie voranstehend beschriebenen Antriebsstrang und mit einer Steuerungseinrichtung, die dazu ausgestaltet ist, ein wie voranstehend beschriebenes Verfahren auszuführen.

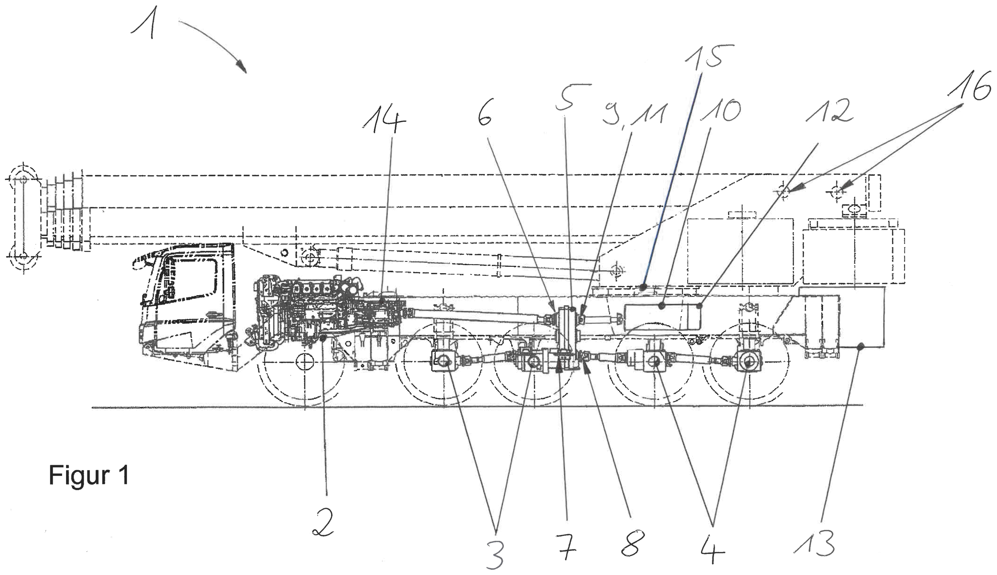

Die Erfindung wird nachfolgend anhand einer bevorzugten Ausführungsform und unter Bezugnahme auf die beiliegende Figur näher erläutert. Hierbei zeigt die
- Figur 1: einen Mobilkran umfassend einen erfindungsgemäßen Antriebsstrang zur Leistungsversorgung des Fahrantriebs.

Die Figur 1 zeigt einen Mobilkran 1mit einem im Unterwagen angeordneten Verbrennungsmotor 2, der über ein schaltbares oder automatisches Getriebe 14 und ein Verteilergetriebe 5 die im vorderen Bereich des Kranunterwagens angeordneten Fahrwerksachsen 3 sowie die im hinteren Bereich des Kranunterwagens angeordneten Fahrwerksachsen 4 antreibt. Der Antriebsstrang ist hierbei so aufgebaut, dass der Verbrennungsmotor 2 über den Antrieb 6 mit dem Verteilergetriebe 5 verbunden ist, welches die vom Verbrennungsmotor 2 bereitgestellte Leistung auf die jeweiligen Abtriebe 7 und 8 für die vorderen Fahrwerksachsen 3 bzw. die hinteren Fahrwerksachsen 4 verzweigt.

Koaxial zum Antrieb 6 angeordnet weist das Verteilergetriebe 5 einen zusätzlichen (Neben-) Abtrieb bzw. Antrieb 9 auf, über welchen erfindungsgemäß ein Motor-Generator 10 an das Verteilergetriebe 5 angebunden ist und somit Leistung an den Antriebsstrang abgeben bzw. von diesem aufnehmen kann. Im gezeigten Beispiel kann der Ab- bzw. Antrieb 9 mittels einer Klauenkupplung 11 vom Motor-Generator 10 mechanisch getrennt werden und nimmt somit vom Antriebsstrang keine Leistung mehr auf bzw. gibt keine Leistung mehr an den Antriebsstrang ab.

Als Energiespeicher dient der im hinteren Bereich des Kranunterwagens angeordnete Akkumulator 13. Die Steuerungseinrichtung 12 ist so ausgestaltet, dass sie den Motor-Generator 10 entsprechend den voranstehend beschriebenen Verfahren ansteuert bzw. regelt.

Mittels des erfindungsgemäß an den Antriebsstrang für den Fahrantrieb angebundenen Motor-Generator 10 ist es nicht nur möglich, den Fahrantrieb durch einen elektromechanischen Wandler in Form des Motor-Generators 10 zu unterstützen, im Falle von Fahrten im Gelände- oder Kriechgang sogar gänzlich durch den Motor-Generator 10 anzutreiben, sondern es können auch während des Kranbetriebs elektrische Antriebe für Kranfunktionen mit Leistung versorgt werden. Im gezeigten Beispiel umfassen diese Kranfunktionen das elektrisch angetriebene Drehwerk 15 und die elektrisch angetriebenen Winden 16 für das Hubwerk und das Hilfshubwerk und können ferner elektrisch angetriebene Hydraulikpumpen für beispielsweise das Teleskopieren und/oder Wippen des Teleskopauslegers umfassen. Ebenso ist es hierdurch möglich, weitere Krankomponenten mit elektrischer Leistung zu versorgen, beispielsweise ein elektrisch versorgtes Thermomanagementsystem zum Beheizen und/oder Kühlen von Krankomponenten, der Krankabine und/oder des Akkumulator 13. So lange der Ladezustand des Akkumulators 13 dies zulässt, kann der Fahrantrieb wie auch die Kranfunktionen gänzlich elektrisch und somit emissionsfrei betrieben werden, ohne dass hierfür der Verbrennungsmotor 2 laufen oder eine externe Stromversorgung an den Mobilkran 1 angeschlossen werden muss. Sollte der Akkumulator 13 für einen autarken und emissionsfreien Kranbetrieb nicht mehr ausreichend geladen sein und auch keine externe Stromversorgung zur Verfügung stehen, kann die für den Betrieb der Kranfunktionen 15, 16 notwendige Leistung vom Verbrennungsmotor 2 erbracht und vom Motor-Generator 10 gewandelt werden.

## Patentansprüche

1. Mobilkran-Antriebsstrang zur Leistungsversorgung des Fahrantriebs, mit
- einem Verbrennungsmotor (2) zur Bereitstellung von Antriebsleistung;
- zumindest zwei angetriebenen Fahrwerksachsen (3, 4); und
- einem zwischen dem Verbrennungsmotor (2) und den Fahrwerksachsen (3, 4) angeordneten Verteilergetriebe (5), welches die vom Verbrennungsmotor (2) bereitgestellte Leistung auf die Fahrwerksachsen (3, 4) verzweigt und hierfür einen mit dem Verbrennungsmotor (2) gekoppelten Antrieb (6) und zwei jeweils mit zumindest einer Fahrwerksachse (3, 4) gekoppelte Abtriebe (7, 8) aufweist;
**dadurch gekennzeichnet, dass**
das Verteilergetriebe (5) über zumindest einen weiteren Antrieb (9) mit zumindest einem Motor-Generator (10) gekoppelt ist, welcher dazu ausgestaltet ist, den Antriebsstrang wahlweise mit Leistung zu versorgen oder Leistung vom Antriebsstrang aufzunehmen.

2. Mobilkran-Antriebsstrang nach Anspruch 1, wobei das Verteilergetriebe (5) dauerhaft mit dem Motor-Generator (10) gekoppelt ist.

3. Mobilkran-Antriebsstrang nach Anspruch 1, wobei das Verteilergetriebe (5) trennbar mit dem Motor-Generator (10) gekoppelt ist, insbesondere mittels einer formschlüssigen Kupplung (11).

4. Mobilkran-Antriebsstrang nach einem der Ansprüche 1 bis 3, wobei der mit dem Verbrennungsmotor (2) gekoppelte Antrieb (6) und der mit dem Motor-Generator (10) gekoppelte Antrieb (9) koaxial angeordnet sind, insbesondere wobei das Verteilergetriebe (5) einen Durchtrieb zwischen dem mit dem Verbrennungsmotor (2) gekoppelten Antrieb (6) und dem mit dem Motor-Generator (10) gekoppelten Antrieb (9) bereitstellt.

5. Mobilkran-Antriebsstrang nach einem der Ansprüche 1 bis 4, mit ferner einer Steuerungseinrichtung (12), welche dazu ausgestaltet ist, die vom Motor-Generator (10) an den Antriebsstrang abgegebene und/oder die vom Motor-Generator (10) aus dem Antriebsstrang aufgenommene Leistung automatisch zu steuern, insbesondere zu regeln.

6. Verfahren zur Steuerung eines Mobilkran-Antriebsstrangs nach einem der Ansprüche 1 bis 5, wobei der Motor-Generator (10) während des Fahrbetriebs des Mobilkrans (1) wahlweise so angesteuert wird, dass
- der Motor-Generator (10) zeitgleich mit dem Verbrennungsmotor (2) den Fahrantrieb mit Leistung versorgt, insbesondere bei hoher Last, im Speziellen bei Volllast des Verbrennungsmotors (2);
- der Motor-Generator (10) dem Fahrantrieb Leistung zum Laden eines zur Leistungsversorgung des Mobilkrans (1) ausgestalteten Akkumulators (13) entnimmt, insbesondere in Abhängigkeit der bis zum nächsten Kranbetrieb zur Verfügung stehenden Zeit;
- ausschließlich der Motor-Generator (10) den Fahrantrieb mit Leistung versorgt, insbesondere wenn durch das Verteilergetriebe (5) eine Untersetzung des Fahrantriebs erfolgt; und/oder
- eine Abschaltung der Leistungsabgabe und/oder der Leistungsaufnahme des Motor-Generators (10) erfolgt, sobald ein Anti-Blockier-System oder Bremsregelsystem an den Fahrwerksachsen (3, 4) eingreift.

7. Verfahren nach Anspruch 6, wobei
- bei Leistungsversorgung des Fahrantriebs durch den Motor-Generator (10) die Leistungsabgabe des Motor-Generators (10); und/oder
- bei Leistungsaufnahme durch den Motor-Generator (10) aus dem Fahrantrieb die Leistungsaufnahme des Motor-Generators (10);
- in Abhängigkeit zumindest einer der folgenden Größen angesteuert wird:
- Fahrgeschwindigkeit des Mobilkrans (1);
- Bremspedalstellung;
- Gaspedalstellung bzw. Last des Verbrennungsmotors (2);
- Drehzahl des Verbrennungsmotors (2);
- derzeitige Übersetzung des dem Verteilergetriebe vorgeschalteten Getriebes (14), insbesondere Schalt- oder Automatikgetriebes;
- Schaltzustand bzw. Untersetzung des insbesondere mehrstufigen Verteilergetriebes;
- jeweilige Temperaturen des Motor-Generators (10), des Akkumulators (13) und/oder der diesen zugeordneten Komponenten;
- Ladezustand des Akkumulators (13);
- vordefinierter, insbesondere durch den Fahrer oder Bediener gewählter Betriebszustand und/oder Leistungsprofil des Krans und/oder des Akkumulator.

8. Verfahren nach einem der Ansprüche 6 und 7, wobei die Kopplung zwischen dem Verteilergetriebe (6) und dem Motor-Generator (10) getrennt wird, insbesondere durch Öffnen einer formschlüssigen Kupplung (11), sobald der Akkumulator (13) einen vordefinierten Ladezustand erreicht hat und der Mobilkran (1) zumindest vorübergehend zum Stillstand gekommen ist.

9. Verfahren nach einem der Ansprüche 6 bis 8, wobei für den Kranbetrieb des Mobilkrans (1), bei dem das Verteilergetriebe (6) bzw. dessen Abtriebe (7, 8) die Fahrwerksachsen (3, 4) nicht antreiben und das dem Verteilergetriebe (6) vorgeschaltete Getriebe (14) ein vordefiniertes Übersetzungsverhältnis bereitstellt, der Motor-Generator (10) elektrische Antriebe (15, 16) von Kranfunktionen und/oder elektrisch betriebene Krankomponenten mit Leistung versorgt, insbesondere
- mittelbar über einen zwischen den Motor-Generator (10) und die Antriebe (15, 16) der Kranfunktionen geschalteten Akkumulator (13) und/oder
- unmittelbar während eines bei defektem und/oder entladenem Akkumulator und/oder bei zu hoher oder zu niedriger Temperatur des Akkumulators herrschenden Notbetriebs der Antriebe der Kranfunktionen.

10. Mobilkran mit einem Antriebsstrang nach einem der Ansprüche 1 bis 5 und insbesondere mit einer Steuerungseinrichtung (12), die dazu ausgestaltet ist, ein Verfahren nach einem der Ansprüche 6 bis 9 auszuführen.
